# DEMANDE DE BREVET EUROPEEN

(11) **EP 1 065 608 A1**
(43) Date de publication de la demande: **03.01.2001**
(21) Numéro de dépôt: 00401859.4
(22) Date de dépôt: 29.06.2000
(51) Int. Cl.: G06F 17/30

(54) **Procédé et système de gestion locale de la distribution de programmes multimédia**

(30) Priorité: 01.07.1999 FR 9908491
(71) Demandeur: Television Française 1, 75015 Paris (FR)
(72) Inventeur: Marfaing, Pierre, 78000 Versailles (FR); Forsans, Olivier, 78160 Marly-le-Roi (FR); Gardy, Régis, 75015 Paris (FR); Cremer, Eric, 75014 Paris (FR)
(74) Mandataire: de Roquemaurel, Bruno

(57) **Abrégé**

L'invention concerne un procédé de gestion locale de fichiers numériques de programmes multimédia, vidéo et/ou audio diffusés par satellite et destinés à être distribués sous forme d'un service de programme à la demande et/ou d'un service de distribution de programmes à horaires planifiés dans une pluralité de sites. Lesdits fichiers comportant des paramètres d'identification et des paramètres de gestion qui sont comparés localement au niveau d'un site donné à un ensemble de critères de sélection affectés à ce site, de telle sorte qu'un programme transmis soit enregistré automatiquement dans une mémoire dudit site si les paramètres d'identification et les paramètres de gestion des conditions de distribution de ce programme correspondent aux critères de sélection affectés à ce site.

## Description

La présente invention concerne un procédé et un système de gestion locale de fichiers numériques de programmes multimédia, vidéo et/ou audio diffusés par satellite et destinés à être distribués sous forme d'un service de programmes à la demande et/ou d'un service de distribution de programmes à horaires planifiés dans une pluralité de sites, lesdits fichiers comportant des paramètres d'identification du contenu du programme.

Les systèmes de distribution des programmes numériques sont connus et consistent à distribuer, à la demande d'un utilisateur ou à horaires planifiés, des programmes audio/vidéo préalablement numérisés, compressés et stockés dans une mémoire. Généralement, la mise à jour à distance des programmes distribués dans les sites s'opère de deux façons :
- par adressage des mêmes programmes à un large ensemble de sites destinataires. Ce procédé est simple à mettre en oeuvre et peu onéreux mais ne permet pas de prendre en compte les besoins spécifiques des sites destinataires notamment pour tenir compte par exemple des exigences linguistiques, culturelles, légales ou religieuses des usagers des différents sites.
- par un adressage individuel de chaque site destinataire prenant en considération les besoins spécifiques à chaque site. Ce procédé permet une offre différenciée de programmes mais nécessite une gestion préalable centralisée de la distribution dans chaque site au niveau du site diffuseur. Cette solution est ainsi adaptée à un nombre réduit de sites destinataires mais sa complexité de mise en oeuvre et son coût croissent avec l'augmentation du nombre de sites destinataires devenant ainsi un obstacle à la différenciation de l'offre de programmes. Par ailleurs, les systèmes connus ne sont pas autonomes du fait que le gestionnaire d'un site donné ne peut pas intervenir localement pour modifier le choix des programmes distribués.

L'invention a pour but de remédier aux insuffisances des systèmes de l'art antérieur.

Le procédé selon l'invention est caractérisé par le fait que lesdits fichiers comportent en outre des paramètres de gestion définissant les conditions particulières de distribution dans un site des programmes diffusés, les paramètres d'identification et les paramètres de gestion de la distribution des programmes étant comparés localement au niveau d'un site donné à un ensemble de critères de sélection affectés à ce site, de manière qu'un programme diffusé soit enregistré automatiquement et conservé dans une mémoire dudit site si les paramètres d'identification et les paramètres de gestion des conditions de distribution de ce programme correspondent aux critères de sélection affectés à ce site.

Grâce au procédé selon l'invention, la gestion de la mise à jour des programmes est notablement simplifiée en permettant aux gestionnaires des sites de définir localement des critères de réception sélective adaptés à leurs besoins supprimant ainsi pour le diffuseur la nécessité d'un adressage individuel des sites destinataires.

Avantageusement, les critères de sélection d'un site sont répartis entre au moins un ensemble de critères spécifiques contenant un groupe de paramètres statiques et un groupe de paramètres dynamiques, et au moins un ensemble de critères généraux concernant les programmes à distribuer sur le site, cet ensemble contenant une indication générique des catégories de programmes à distribuer et un groupe de paramètres de fonctionnement généraux.

Selon une particularité de l'invention, chaque programme distribué sur un site donné est enregistré dans une case de programmation respective, chaque case de programmation étant associée à un ensemble respectif de critères spécifiques.

A la réception sur le site d'un programme diffusé, les données numériques d'identification de ce programme sont comparées aux paramètres statiques de chaque ensemble de critères spécifiques. L'enregistrement de ce nouveau programme reçu s'opère automatiquement si les données numériques d'identification de ce programme correspondent aux paramètres statiques d'au moins un ensemble de critères spécifiques. Si plusieurs ensembles de critères spécifiques correspondent aux données d'identification associées au programme reçu, les paramètres dynamiques de chacun de ces ensembles sont analysés pour déterminer le programme correspondant à remplacer par le nouveau programme reçu.

Le groupe de paramètres statiques de chaque ensemble de critères spécifiques associé à une case de programmation comporte au moins une indication générique de catégorie du programme, au moins une indication de sous-catégorie du programme, une indication du pays de production du programme, une indication du niveau de censure, une indication d'au moins une langue associée au programme. Le groupe de paramètres dynamiques de chaque ensemble de critères spécifiques comporte un paramètre d'identification du programme présent dans la case de programmation, un paramètre de localisation de la case de programmation associée dans la mémoire du site, un paramètre indiquant la dernière date de changement du programme, un paramètre indiquant le dernier résultat de la mesure du niveau de consommation du programme présent, une durée minimum de distribution locale spécifique à ce programme, une durée maximum de distribution locale spécifique à ce programme et une date de fin de distribution spécifique à ce programme.

Selon une autre particularité de l'invention, les paramètres de fonctionnement de l'ensemble de critères généraux sont également utilisés pour déterminer le programme à remplacer par le programme nouveau reçu.

De préférence, le groupe de paramètres de fonctionnement de l'ensemble de critères généraux comporte une durée minimum de distribution locale d'un programme, une durée maximum de distribution locale d'un programme, un critère de sensibilité de chaque catégorie de programme soit à la date de mise à jour du programme soit au niveau de consommation, et un temps d'étude de la consommation (TEC) qui permet de définir la période écoulée pendant laquelle la consommation d'un programme sera mesurée.

Grâce à ces dispositions, l'organe de diffusion des programmes peut, par un choix approprié des paramètres de gestion transmis avec les programmes diffusés, optimiser la consommation de ceux-ci au niveau de chaque site, en remplaçant plus rapidement les programmes qui ne sont pas demandés souvent, et en conservant plus longtemps en mémoire les programmes qui ont plus de succès.

Le procédé selon l'invention est mis en oeuvre par un système de gestion locale de fichiers numériques comportant un module de sélection des programmes diffusés coopérant avec un module de mise en ligne de ces programmes, ledit module de sélection est conçu de manière à décider si un programme diffusé doit être retenu, et à choisir, le cas échéant, le programme déjà présent sur le site qui doit être remplacé, tandis que le module de mise en ligne prend en charge la mise en ligne automatique dudit programme enregistré en tenant compte des distributions en cours et/ou planifiées du programme à remplacer.

D'autres caractéristiques et avantages de l'invention ressortiront de la description qui va suivre, prise à titre d'exemple non limitatif, en référence aux figures annexées dans lesquelles :
- la figure 1 représente un schéma bloc d'un système de gestion locale de programmes multimédia selon l'invention ;
- la figure 2 représente un tableau illustrant des catégories de programmes diffusés selon l'invention.

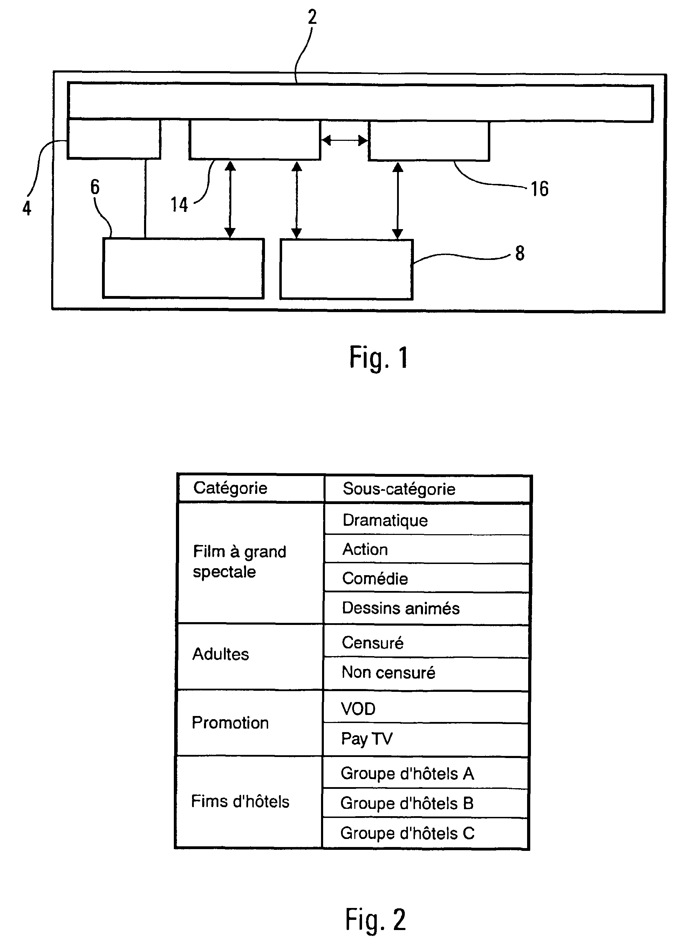

La figure 1 illustre schématiquement un système de gestion locale de fichiers numériques de programmes multimédia, vidéo et/ou audio diffusés par satellite et destinés à être distribués sous forme d'un service de programme à la demande et/ou d'un service de distribution de programmes à horaires planifiés dans une pluralité de sites, lesdits fichiers comportant des paramètres d'identification et des paramètres de gestion définissant les conditions particulières de distribution desdits programmes dans un site.

Ce système offre différents services de vidéo à la demande, "Pay-Per-View", canal de promotion, publicité ciblée, etc...

En référence à la figure 1, un module 2 assure la communication entre le système de gestion locale de programmes multimédia et le système d'exploitation. Pour mettre à jour les programmes des services offerts, chaque site reçoit par satellite des programmes multimédia, vidéo, textes et données, accompagnés de paramètres d'identification et de paramètres de gestion définissant les conditions particulières de leur distribution dans les sites. La surveillance de la réception satellite des programmes est assurée par un module de contrôle 4 qui permet en outre de vérifier que les moyens de gestion locale des services sont actifs. Un module d'interface 6 détecte la réception d'un nouveau programme et acquiert les informations qui lui sont associées.

Le système selon l'invention comporte en outre un module de sélection 14 des programmes diffusés coopérant avec un module de mise en ligne 16 de ces programmes, le module de sélection 14 étant conçu de manière à décider si un programme diffusé doit être retenu, et à choisir, le cas échéant, le programme déjà présent sur le site qui doit être remplacé, tandis que le module de mise en ligne 16 assure la mise en ligne automatique du nouveau programme, après son enregistrement, en tenant compte des distributions en cours et/ou planifiées du programme à remplacer. Un module d'interface 8 assure le dialogue entre le module de sélection 14 et le module de mise en ligne 16, pour prendre connaissance des distributions en cours ou planifiées de l'éventuel programme à remplacer.

Selon un mode préféré de réalisation de l'invention, le module de sélection 14 des programmes reçus comporte des moyens pour déterminer si un programme reçu sur un site donné correspond aux critères de sélection définis pour ce site et des moyens pour déterminer le programme devant être remplacé sur ce site.

Pour effectuer la sélection du programme à enregistrer, les paramètres d'identification et les paramètres de gestion de la distribution du programme sont comparés localement au niveau d'un site donné à un ensemble de critères de sélection affectés à ce site, de telle sorte qu'un programme transmis soit enregistré automatiquement dans une mémoire dudit site si les paramètres d'identification et les paramètres de gestion des conditions particulières de distribution de ce programme correspondent aux critères de sélection affectés à ce site.

En pratique, un programme est toujours diffusé à tous les sites d'un même territoire ou d'un groupe de territoires. Localement, le moyen de sélection 14 de chaque site utilise les informations décrites précédemment pour sélectionner ou non un programme et remplacer ou non un programme déjà présent sur le site.

Les traitements successifs nécessaires pour effectuer cette sélection concernent respectivement :
- la détermination de la conformité ou non des paramètres du programme diffusé avec les critères de sélection affectés au site,
- le cas échéant, la détermination du programme devant être remplacé.

Ces traitements sont basés sur des règles simples appliquées successivement. Ils reposent sur le principe que les critères de sélection définis au niveau de chaque site constituent des filtres de programmes qui sont mis en oeuvre localement pour répondre aux exigences spécifiques desdits sites. Ces critères peuvent être combinés de plusieurs manières de façon à permettre une sélection précise des programmes, notamment, et à titre d'exemple non limitatif, en ce qui concerne les catégories, les sous-catégories et les versions linguistiques des programmes.

Les programmes distribués par un site sont stockés dans une mémoire divisée en cases de programmation, à raison d'une case par programme à distribuer, chaque case étant associée à un ensemble respectif de critères spécifiques regroupant des paramètres définissant au moins partiellement les critères de sélection à appliquer au niveau du site.

Le filtrage des programmes fait également appel à un ensemble de critères généraux concernant les programmes à distribuer au niveau du site, regroupant des paramètres généraux de définition des critères de sélection.

Dans un mode préféré de réalisation de l'invention, chaque ensemble de critères spécifiques comporte un groupe de paramètres statiques et un groupe de paramètres dynamiques qui est mis à jour notamment à l'enregistrement d'un programme reçu dans la case de programmation correspondante, et à chaque distribution. L'ensemble de critères généraux comporte une indication générique des catégories de programmes à distribuer et un groupe de paramètres de fonctionnement. Ceux-ci sont comparés avec les paramètres de gestion des conditions particulières de distribution associés à chaque fichier transmis.

L'enregistrement d'un programme dans un site donné s'opère automatiquement si le contenu de ce programme correspond à la fois aux paramètres statiques et dynamiques d'un ou plusieurs ensembles de critères spécifiques et aux paramètres de fonctionnement de l'ensemble de critères généraux.

Les paramètres d'identification d'un programme comprennent :
- un nom permettant d'identifier de façon unique le programme quelle que soit la langue associée,
- une catégorie et une sous catégorie,
- une liste de langues disponibles,
- un niveau de censure,
et éventuellement :
- le pays de production,

Les paramètres de gestion des conditions de la distribution d'un programme comportent :
- des temps minimum et maximum de programmation (par exemple exprimés en nombre de jours),
- une date de fin de droit de diffusion (optionnel), et
- l'identifiant du programme à remplacer (optionnel).

Ce dernier identifiant permet de forcer le remplacement d'un programme enregistré sur les sites. S'il est renseigné, cet identificant est utilisé prioritairement pour sélectionner le programme à remplacer.

Le groupe de paramètres de fonctionnement de l'ensemble de critères généraux comporte :
- une durée minimum de distribution locale d'un programme,
- une durée maximum de distribution locale d'un programme,
- un temps d'étude de la consommation (TEC) qui permet de définir la période pendant laquelle la consommation d'un programme sera mesurée, et
- pour chaque catégorie de programmes acceptée par le site, un critère de sensibilité qui détermine si la mise à jour d'une case de programmation appartenant à la catégorie doit être effectuée en fonction de la dernière date de mise à jour de la case, ou du niveau de consommation du programme stocké dans la case.

Les paramètres de durée minimum et de durée maximum de distribution d'un programme de l'ensemble de critères généraux peuvent également être établis par défaut pour tous les programmes d'une même catégorie.

Le groupe de paramètres statiques de chaque ensemble de critères spécifiques peut comporter :
- au moins une indication générique de catégorie du programme,
- au moins une indication de sous-catégorie du programme,
- une indication du pays de production du programme,
- un niveau de censure, et
- une indication d'une langue obligatoire associée au programme, et éventuellement des langues optionnelles.

Le groupe de paramètres dynamiques de chaque ensemble de critères spécifiques comporte :
- un paramètre d'identification du programme présent,
- un paramètre de localisation de ce programme dans la mémoire du site,
- un paramètre indiquant la dernière date de changement du programme,
- un paramètre indiquant le dernier résultat de la mesure du niveau de consommation du programme présent (par exemple le nombre de fois que le programme à été distribué),
- une durée minimum de distribution locale spécifique à ce programme,
- une durée maximum de distribution locale spécifique à ce programme, et
- une date de fin de distribution spécifique à ce programme.

Le niveau de censure peut être indiqué pour interdire, par exemple, l'enregistrement et la distribution de films violents.

L'indication du pays de production du programme peut être utile pour respecter des quotas de production nationale. Les paramètres dynamiques sont relatifs au programme présent dans la case de programmation associée. Ils sont enregistrés dans l'ensemble de critères spécifiques à la réception d'un programme dans la mesure où ils ont été spécifiés à la diffusion du programme. Les indications de durée des paramètres dynamiques sont donc facultatives mais prioritaires sur les durées définies localement par défaut dans l'ensemble de critères généraux.

Les paramètres de l'ensemble de critères généraux et les paramètres statiques des ensembles de critères spécifiques sont définis à la mise en service du système en fonction des besoins spécifiques du site, et ne peuvent être modifiés que par l'intervention de l'émetteur des programmes.

Selon un mode particulier de réalisation de l'invention, à la réception d'un programme, les données d'identification de ce programme sont comparées aux paramètres statiques de chaque ensemble de critères spécifiques. Si aucun ensemble de critères spécifiques correspond aux données d'identification du programme reçu, celui-ci est rejeté. Si un seul ensemble de critères spécifiques correspond aux données d'identification du programme reçu, le programme correspondant à l'ensemble de critères spécifiques trouvé est remplacé par le programme reçu. Si plusieurs ensembles de critères spécifiques correspondent aux données d'identification du programme reçu et si aucune case correspondant n'est vide, le traitement qui suit consiste à déterminer quel programme associé aux ensembles de critères spécifiques ainsi trouvés, doit être remplacé. Ce traitement consiste à analyser les paramètres dynamiques des ensembles de critères spécifiques à l'aide des paramètres de fonctionnement de l'ensemble de critères généraux.

Au cours de ce traitement, si elles ont été spécifiées, les durées minimum et maximum de distribution spécifique à chaque programme, et la date de fin de distribution spécifique à chaque ensemble de critères spécifiques sont prises en compte de façon prioritaire par rapport aux paramètres de fonctionnement de l'ensemble de critères généraux, pour sélectionner le programme à remplacer. La date de fin de distribution est impérativement respectée quelles que soient les durées minimum et maximum de distribution d'un programme, et indépendamment de toute diffusion de nouveaux programmes. Ainsi, tous les programmes enregistrés rencontrés, dont la date de fin de diffusion est atteinte, sont systématiquement effacés.

Par ailleurs, le remplacement prioritaire d'un programme peut être imposé par le diffuseur lors de la diffusion d'un nouveau programme en transmettant avec le nouveau programme le paramètre d'identification du programme présent sur le site à remplacer prioritairement.

De même, pour un programme donné en cours de distribution, le diffuseur peut modifier la durée minimum de programmation spécifique à ce programme, la durée maximum de programmation spécifique à ce programme, la date de fin de distribution spécifique à ce programme, de façon à influencer son remplacement ou non remplacement par un nouveau programme ou imposer l'arrêt de sa distribution.

En fonctionnement normal, le programme ayant le plus grand temps de dépassement au delà de la durée maximum de distribution, spécifique ou définie par défaut, est remplacé en priorité, et le critère de sensibilité est utilisé pour sélectionner un programme à remplacer si aucun programme présent sur le site ne dépasse la durée maximum de distribution par rapport à la dernière date de changement de programme.

Dans ce cas, le programme ayant la plus ancienne date changement de programme est remplacé prioritairement si le critère de sensibilité est la date de changement de programme, et le programme ayant eu le plus petit niveau de consommation pendant le temps d'étude de consommation (TEC) est remplacé prioritairement si le critère de sensibilité utilisé est le niveau de consommation.

La mise en ligne des contenus débute dès lors que le système a déterminé quel programme doit être remplacé. L'objectif de cette opération est de permettre la mise à jour des programmes accessibles sur le site sans intervention humaine locale et sans désagrément pour le client. Cette opération tient compte de l'utilisation éventuelle du programme remplacé. Trois cas peuvent se présenter :
- le contenu est en cours de distribution :
   - dans un service de vidéo à la demande VOD ("Video on demand", en langue anglaise) ;
   - dans un service de distribution de programmes à horaires planifiés ("Pay-Per-View", en langue anglaise, canal de promotion, etc.) ;
   - dans un service mixte (VOD + distribution de programmes à horaires planifiés, etc.) ;
- la distribution du programme est prochainement planifiée ;
- le programme a été acheté par un client (VOD) mais n'est pas en cours de distribution ;

Afin de gérer au mieux ces différents cas la mise en ligne est effectuée en trois étapes :

Étape 1 : début de réception, aucune opération particulière n'est faite à cette étape.

Étape 2 : fin de réception, dès la fin de la réception, les menus sont modifiés pour permettre l'accès au nouveau programme, l'ancien programme n'étant pas encore remplacé.

Étape 3 : effacement de l'ancien programme lorsque sa dernière distribution est terminée, et mise à jour des paramètres dynamiques de l'ensemble de critères spécifiques associé à la case de programmation où est enregistré le programme reçu et ainsi mis en ligne, avec les paramètres de gestion de ce programme.

Pour permettre à l'organisme de diffusion des programmes ou un autre organisme de gestion de suivre la consommation des programmes sur chaque site, le système tient à jour un journal dans lequel il mémorise la date et l'heure de chaque distribution de programme, en association avec le nom du programme, et éventuellement d'autres informations intéressant l'organisme de gestion. Ce journal est transmis périodiquement, par exemple une fois par jour ou par semaine, sous la forme d'un fichier à l'organisme de gestion, par exemple par l'intermédiaire d'un modem et d'une liaison téléphonique, ou du réseau Internet.

## Revendications

1. Procédé de gestion locale de fichiers numériques de programmes multimédia, vidéo et/ou audio diffusés par satellite et destinés à être distribués sous forme d'un service de programme à la demande et/ou d'un service de distribution de programmes à horaires planifiés dans une pluralité de sites, lesdits fichiers comportant des paramètres d'identification,
caractérisé en ce que lesdits fichiers comportent en outre des paramètres de gestion définissant les conditions particulières de distribution dans un site des programmes diffusés, lesdits paramètres d'identification et lesdits paramètres de gestion sont comparés localement au niveau d'un site donné à un ensemble de critères de sélection affectés à ce site, de telle sorte qu'un programme transmis soit enregistré automatiquement et conservé dans une mémoire dudit site si les paramètres d'identification et les paramètres de gestion des conditions de distribution de ce programme correspondent aux critères de sélection affectés à ce site.

2. Procédé selon la revendication 1,
caractérisé en ce que les critères de sélection d'un site sont répartis entre au moins un ensemble de critères spécifiques contenant un groupe de paramètres statiques et un groupe de paramètres dynamiques, et au moins un ensemble de critères généraux concernant les programmes à distribuer sur le site, cet ensemble contenant une indication générique des catégories de programmes à distribuer sur le site et un groupe de paramètres de fonctionnement généraux.

3. Procédé selon la revendication 1 ou 2,
caractérisé en ce que chaque programme distribué sur un site donné est enregistré dans une case de programmation respective, chaque case de programmation étant associée à un ensemble respectif de critères spécifiques.

4. Procédé selon la revendication 2 ou 3,
caractérisé en ce qu'à la réception sur le site d'un programme diffusé, les données numériques d'identification de ce programme sont comparées aux paramètres statiques de chaque ensemble de critères spécifiques.

5. Procédé selon la revendication 4,
caractérisé en ce que l'enregistrement d'un nouveau programme reçu s'opère automatiquement si les données numériques d'identification de ce programme correspondent aux paramètres statiques d'au moins un ensemble de critères spécifiques.

6. Procédé selon la revendication 5,
caractérisé en ce que si plusieurs ensembles de critères spécifiques correspondent aux données d'identification associées au programme reçu, les paramètres dynamiques de chacun de ces ensembles sont analysés pour déterminer le programme à remplacer par le nouveau programme reçu.

7. Procédé selon la revendication 6,
caractérisé en ce que les paramètres de fonctionnement de l'ensemble de critères généraux sont également utilisés pour déterminer le programme à remplacer par le nouveau programme reçu.

8. Procédé selon l'une des revendications 2 à 7,
caractérisé en ce que le groupe de paramètres statiques de chaque ensemble de critères spécifiques associé à une case de programmation comporte au moins une indication générique de catégorie du programme, au moins une indication de sous-catégorie du programme, une indication du pays de production du programme, une indication du niveau de censure, une indication d'au moins une langue associée au programme, et en ce que le groupe de paramètres dynamiques dudit ensemble de critères spécifiques comporte un paramètre d'identification du programme présent, un paramètre de localisation de ce programme dans la mémoire du site, un paramètre indiquant la dernière date de changement du programme, un paramètre indiquant le dernier résultat de la mesure du niveau de consommation du programme présent, une durée minimum de distribution locale spécifique à ce programme, une durée maximum de distribution locale spécifique à ce programme et une date de fin de distribution spécifique à ce programme.

9. Procédé selon la revendication 8,
caractérisé en ce qu'à l'enregistrement d'un programme dans une case de programmation, les paramètres dynamiques de l'ensemble de critères spécifiques associés à la case de programmation sont mis à jour à partir des paramètres d'identification et de gestion associé au programme à enregistrer, les paramètres dynamiques étant ensuite mis à jour à chaque distribution du programme sur le site.

10. Procédé selon l'une des revendications 2 à 9, caractérisé en ce que le groupe de paramètres de fonctionnement de l'ensemble de critères généraux comporte une durée minimum de distribution locale d'un programme, une durée maximum de distribution locale d'un programme, un critère de sensibilité de chaque catégorie de programme soit à la date de mise à jour du programme soit au niveau de consommation, et un temps d'étude de la consommation (TEC) qui permet de définir la période écoulée pendant laquelle la consommation d'un programme sera mesurée.

11. Procédé selon la revendication 10,
caractérisé en ce que les paramètres dynamiques de durée minimum de distribution d'un programme, durée maximum de distribution d'un programme et de date de fin de distribution d'un programme sont prises en compte de façon prioritaire par rapport aux paramètres de fonctionnement de l'ensemble de critères généraux pour sélectionner le programme à remplacer, ladite date de fin de distribution étant impérativement respectée quelles que soient les durées minimum et maximum de distribution d'un programme, et indépendamment de toute diffusion de nouveaux programmes.

12. Procédé selon la revendication 10 ou 11,
caractérisé en ce que le programme ayant le plus grand temps de dépassement au delà de la durée maximum de distribution est remplacé en priorité.

13. Procédé selon l'une des revendications 10 à 12, dans lequel le critère de sensibilité est utilisé pour sélectionner un programme à remplacer si aucun programme présent sur le site ne dépasse la durée maximum de distribution par rapport à la dernière date de changement de programme.

14. Procédé selon l'une des revendications 10 à 13, dans lequel la case de programmation ayant la plus ancienne date de changement de programme, est remplacée prioritairement si le critère de sensibilité est la date de changement de programme.

15. Procédé selon l'une des revendications 10 à 14, dans lequel le programme ayant eu le plus petit niveau de consommation pendant le temps d'étude de consommation (TEC) est remplacé prioritairement si le critère de sensibilité utilisé est le niveau de consommation.

16. Procédé selon l'une des revendications 6 à 15, dans lequel le remplacement prioritaire d'un programme peut être imposé par le diffuseur lors de la diffusion d'un nouveau programme en transmettant avec le nouveau programme le paramètre d'identification du programme présent sur le site à remplacer prioritairement.

17. Procédé selon l'une des revendications 8 à 16, dans lequel, pour un programme donné présent sur le site, le diffuseur peut modifier la durée minimum de programmation spécifique à ce programme, la durée maximum de programmation spécifique à ce programme, la date de fin de distribution spécifique à ce programme, de façon à influencer son remplacement ou non remplacement par un nouveau programme ou imposer l'arrêt de sa distribution.

18. Système de gestion locale de fichiers numériques comportant des programmes multimédia, vidéo et/ou audio diffusés par satellite et destinés à être distribués sous forme d'un service de programme à la demande et/ou d'un service de distribution de programmes à horaires planifiés dans une pluralité de sites, lesdits fichiers comportant des paramètres d'identification, caractérisé en ce que lesdits fichiers comportant des paramètres d'identification et des paramètres de gestion régissant les conditions de distribution des programmes transmis, et en ce qu'il comporte un module de sélection (14) des programmes diffusés coopérant avec un module de mise en ligne (16) de ces programmes, ledit module de sélection (14) étant conçu de manière à décider si un programme diffusé doit être retenu, et à choisir, le cas échéant, le programme déjà présent sur le site qui doit être remplacé, tandis que le module de mise en ligne (16) prend en charge la mise en ligne automatique dudit programme enregistré en tenant compte des distributions en cours et/ou planifiées du programme à remplacer .

19. Système selon la revendication 18,
caractérisé en ce que le module de sélection (14) des programmes reçus comporte des moyens pour déterminer si un programme reçu sur un site donné correspond aux critères de sélection définis pour ce site et des moyens pour déterminer le programme devant être remplacé sur ce site.
